(19) Europäisches Patentamt / European Patent Office / Office européen des brevets

(11) **EP 3 405 762 B1**

(12) **FASCICULE DE BREVET EUROPEEN**

(45) Date de publication et mention de la délivrance du brevet:
**07.04.2021 Bulletin 2021/14**

(21) Numéro de dépôt: **17701455.2**

(22) Date de dépôt: **19.01.2017**

(51) Int Cl.:
*G01L 19/00* (2006.01)    *G01F 1/38* (2006.01)
*G01L 13/02* (2006.01)

(86) Numéro de dépôt international:
**PCT/EP2017/051102**

(87) Numéro de publication internationale:
**WO 2017/125503 (27.07.2017 Gazette 2017/30)**

(54) **CAPTEUR DE PRESSION DE FLUIDE ET SON UTILISATION**

FLUIDDRUCKSENSOR UND VERWENDUNG DAVON

FLUID PRESSURE SENSOR AND USE THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.01.2016 FR 1600109**

(43) Date de publication de la demande:
**28.11.2018 Bulletin 2018/48**

(73) Titulaire: **Elvesys**
**75011 Paris (FR)**

(72) Inventeurs:
• **LEBERRE, Maël**
**75020 Paris (FR)**
• **VELVE CASQUILLAS, Mathieu**
**75013 Paris (FR)**

(74) Mandataire: **Marconnet, Sébastien**
**Cabinet Sébastien Marconnet**
**1 Quinquies rue Basse de la Terrasse**
**(Bâtiment A)**
**92190 Meudon (FR)**

(56) Documents cités:
**WO-A2-2010/128399      DE-U1-202009 006 149**
**US-A1- 2004 255 645      US-A1- 2006 144 151**

• **OOSTERBROEK R E ET AL: "A micromachined pressure/flow-sensor", SENSORS AND ACTUATORS A: PHYSICAL, ELSEVIER BV, NL, vol. 77, no. 3, 2 novembre 1999 (1999-11-02), pages 167-177, XP004244561, ISSN: 0924-4247, DOI: 10.1016/S0924-4247(99)00188-0**

**Description**

La présente invention concerne un capteur de pression de fluide, de préférence un liquide, notamment un capteur de pression différentiel pour deux fluides, tels qu'un gaz et un liquide. Elle concerne également un ensemble réservoir et capteur de pression intégré dans le bouchon du réservoir, une canalisation de type capillaire faisant office de résistance hydraulique reliant au moins partiellement le liquide du réservoir à une entrée du capteur.

Un tel capteur peut s'intégrer dans un système de mesure de débit d'un liquide dans un circuit micro fluidique, la mesure de débit étant rapide, précise, et beaucoup plus simple à mettre en œuvre que les méthodes connues de mesure de débit adaptées aux débits micro fluidiques. Par ailleurs, cette méthode de mesure de débit permet un asservissement rapide du débit mesuré, c'est à dire un contrôle de débit du liquide.

D'autres aspects de l'invention concernent l'utilisation du capteur de pression, sous forme simple ou différentielle, dans des applications telles que la perfusion d'un milieu de culture cellulaire, de réactifs dans un réacteur chimique, le contrôle du bouchage de canalisations micro fluidiques, ou la réalisation d'un générateur de gouttes à cadence élevée.

De l'article intitulé « micromachined flow sensors-a review » de N.T.Nguyen publié dans la revue FLOW MEASUREMENT AND INSTRUMENTATION-MARCH 1997, on connaît de nombreuses méthodes de mesure du débit d'un liquide dans la gamme des débits micro fluidiques, c'est à dire les débits de liquide inférieurs à 100 mL/min, et typiquement compris entre 1 µL/min et 1 mL/min pour la majorité des applications. Les méthodes les plus courantes sont basées sur l'utilisation de capteurs thermiques faisant usage de la mesure du déplacement d'un flux thermique transporté par le mouvement du liquide (voir par exemple le capteur de la gamme LG16 commercialisé par la société Sensirion AG.).

Il est également connu d'utiliser des capteurs vibrants basés sur la force de Coriolis pour réaliser des mesures de débit de fluides tels que ceux commercialisés sous la dénomination Cori-FLOW par la société Bronkhorst.

Il est connu également d'utiliser la mesure d'une différence de pressions pour mesurer des débits de gaz (voir par exemple les capteurs de pression différentiels commercialisés par la société First Sensor).

Des capteurs de pression sont décrits par exemple dans les brevets US5515735, US8403908, ou WO9740350 et sont utilisables pour la mesure de débit de liquides à l'aide de deux capteurs de pression liquide mesurant la perte de charge du liquide dans une canalisation ou à travers des restrictions de formes diverses.

Dans l'article intitulé « Design and Fabrication of a MEMS Flow Sensor and Its Application in Precise Liquid Dispensing de Yaxin Liu et al - State Key Laboratory of Robotics and System, Harbin Institute of Technology, Harbin, China » les auteurs mesurent cette différence de pression en aval d'un réservoir de liquide contrôlé en pression à l'aide de deux capteurs de pression de liquide.

Il est également connu de US 2006/144151 un capteur de pression d'un liquide circulant sous deux diaphragmes 22 et 24, collés à l'aide d'une couche de colle 23 pour réaliser une étanchéité, ce qui est compliqué à réaliser et peu fiable : une solution plus simple et fiable est nécessaire lorsqu'on utilise deux fluides différents à des pressions qui peuvent être variables.

US 2004/0255645 décrit un capteur de pression de liquide avec introduction du liquide aux deux extrémités opposées d'une canalisation placée sous un diaphragme.

L'article de OOSTERBROECK et al intitulé « A micromachined pressure/flow sensor » décrit un capteur de pression et de débit de liquide comportant deux cavités reliées entre elles par un canal conduisant le liquide, chaque cavité étant surmontée d'un capteur capacitif ou piézoélectrique, cette structure avec le liquide circulant sous les capteurs et la présence de volumes morts aux extrémités du canal ne permettant d'obtenir les résultats souhaités.

WO 2010/128399 décrit un capteur de pression micro fluidique disposant d'une cavité de volume réduit.

Tous les capteurs de débits micro fluidiques connus à ce jour et décrits ci-dessus utilisés pour le contrôle d'un débit micro fluidique comportent un certain nombre d'inconvénients :

Les capteurs basés sur une mesure thermique sont en général peu précis et sensibles à l'environnement et à la nature du liquide.

Les capteurs de pression différentiels, utilisant par exemple deux capteurs de pression séparés par une restriction peuvent avoir des temps de réponse beaucoup faibles (< 10 ms) et être précis (< 5%FS) mais ces capteurs sont complexes à réaliser dans une application micro fluidique en un unique élément sensible car il est nécessaire d'intégrer dans cet unique élément deux éléments sensibles à la pression et une restriction sur la même puce micro fluidique. En outre ils nécessitent l'utilisation d'une restriction de diamètre très faible pour induire une perte de charge importante dans un espace compact, ce qui engendre un bouchage fréquent de cette restriction, les rendant peu fiables et difficiles à mettre en œuvre. C'est pour ces raisons qu'aucune solution satisfaisante, simple, fiable et facile à réaliser en micro fluidique n'est disponible aujourd'hui sur le marché et qui permette notamment de mesurer un débit de fluide à l'aide d'un seul capteur de pression.

Le capteur selon l'invention et le système de mesure de débit l'utilisant permettent de répondre au problème posé. L'invention est définie par les revendications.

Le capteur de pression selon l'invention qui comporte un support muni d'un logement dans lequel sont disposés une membrane déformable associée à des moyens de mesure de la déformation de la membrane, la membrane pouvant se déformer sous l'action d'un fluide sous pression, de préférence un liquide, appliqué de préférence sur la surface supérieure de la membrane, les moyens de mesure de la déformation de la membrane étant reliés électriquement à des contacts électriques permettant de recueillir un signal électrique fonction de la pression du fluide, est tel que la surface supérieure de la membrane délimite dans le logement du support la face inférieure d'une cavité comportant également une face supérieure, cavité dans laquelle débouchent deux canalisations distinctes respectivement d'arrivée et de départ (ou vice-versa) d'un fluide, permettant l'écoulement du fluide au contact de la surface supérieure de la membrane, un espace étant disposé sous la membrane permettant à celle-ci de se déplacer sous l'action de la pression du fluide injecté dans le capteur, cet espace disposant d'un évent de sortie et le capteur comportant un joint d'étanchéité disposé latéralement tout autour des parois du logement entre la surface supérieure de la membrane et la face supérieure de la cavité.

De préférence, la cavité est sensiblement dépourvue de tout volume mort de manière à éviter la formation de bulles dans le fluide.

La membrane sera de préférence une membrane souple en silicium.

De préférence également, les moyens de mesure de la déformation de la membrane comportent des éléments sensibles à la déformation de la membrane tels que des éléments réalisés en matériau piézo-résistif.

Les moyens de mesure de la déformation de la membrane remplissent une fonction de transducteurs qui transforment une déformation (extension) de la membrane en un signal (électrique) proportionnel à (ou fonction de) l'amplitude de cette déformation. Ainsi ces moyens comporteront de préférence des éléments sensibles à la déformation de la membrane, tels que par exemple des éléments réalisés dans un matériau piézo-résistif, déposés en couche mince ou implantés dans la membrane. Ils peuvent être disposés selon un schéma simple ou visant à en optimiser la précision, par exemple suivant un pont de Wheatstone pour améliorer la sensibilité, ou intégrant d'autres éléments, par exemple pour compenser l'effet de la température sur la mesure.

Pour plus de détails sur les moyens utilisant des éléments sensibles en matériaux piezo-résistif, on pourra se reporter à l'article de K.N. BHAT intitulé »Silicon Micromachined Pressure Sensors »-Journal of the Indian Institute of Science -vol 87-1-Jan-Mars 2007-journal.library.iisc.ernet.in.

La membrane ainsi que les moyens de mesure de la déformation peuvent être recouverts d'une couche isolante électriquement, pour les protéger de la conductivité électrique d'un liquide en contact, par exemple de l'eau, qui pourrait perturber la mesure. Les moyens de mesure de la déformation de la membrane sont de préférence reliés électriquement à l'extérieur du capteur aux contacts électriques

La cavité peut être par exemple de forme parallélépipédique avec les deux canalisations positionnées dans deux angles supérieurs opposés, ou de forme cylindrique avec les deux canalisations positionnées de manière diamétralement opposées, ou encore sous forme d'un canal reliant les deux canalisations. L'absence substantielle de volume mort (ce que l'homme de métier sait réaliser sans difficulté) évite la formation de bulles, qui peuvent perturber la mesure de pression si une ligne de contact de la bulle est en contact avec la membrane, auquel cas la tension de surface du liquide peut appliquer une force parasite sur la surface du capteur sensible à la pression.

D'autre part, il est préférable qu'aucune bulle provenant du capteur ne soit injectée dans le circuit micro fluidique, car dans de nombreux cas pratiques, une telle bulle perturberait les écoulements dans la puce et son fonctionnement.

Les moyens de mesure de la déformation de la membrane peuvent prendre d'autres formes adaptées tels que des moyens capacitifs, vibrants, etc
De préférence, le volume de la cavité sera inférieur à 50 microlitres, de préférence inférieur à 10 microlitres, plus préférentiellement inférieur à 5 microlitres. Dans tous les cas, on réalisera une cavité de volume aussi faible que possible, mais généralement supérieur à 0,1 microlitre.

Le capteur est muni d'un joint d'étanchéité disposé latéralement tout autour des parois du logement entre la surface supérieure de la membrane (ou du senseur de pression) et la face supérieure de la cavité.

Le capteur comporte un espace disposé sous la membrane permettant à celle-ci de se déplacer sous l'action de la pression du fluide injecté dans le capteur.

Selon un mode préférentiel de réalisation, les canalisations d'arrivée et de départ de fluide dans la cavité font un angle compris entre environ 10° et 90°, de préférence entre 20° et 70° et plus préférentiellement entre 40° et 50°, avec la surface supérieure de la membrane.

Le support est traversé par une canalisation d'arrivée d'un second fluide dont une première extrémité vient à proximité de la surface inférieure de la membrane. Ce second fluide pourra être choisi parmi l'air à pression atmosphérique (fonction d'évent) et/ou un liquide ou un gaz y compris l'air, de préférence à pression différente, par exemple supérieure à la pression atmosphérique.

L'espace est muni d'un évent de sortie. L'extrémité de la canalisation d'arrivée située du côté opposé à la membrane (la seconde extrémité) est munie d'un connecteur fluidique, de manière à pouvoir amener de manière étanche le deuxième fluide dans le capteur de pression, notamment lorsque celui-ci est sous pression, par exemple un gaz.

Le capteur est intégré dans le bouchon d'un réservoir d'un ensemble de mesure de débit, de manière à être solidaire du bouchon, ce dernier étant par ailleurs traversé par un capillaire faisant office de restriction, débouchant dans la canalisation d'arrivée de liquide, à proximité de la cavité du capteur. L'invention concerne également un système intégrant l'ensemble de mesure de débit.

De préférence, la restriction est disposée en amont des moyens capteurs de pression.

L'invention concerne aussi un système de mesure du débit d'un liquide dans un circuit micro fluidique caractérisé en ce qu'il comporte un capteur de pression selon l'invention.

D'une manière générale, le système selon l'invention utilise la mesure de la pression P1 d'un gaz maintenant en pression un liquide s'écoulant dans une restriction et sortant de celle-ci à une pression P2 inférieure à P1 pour contrôler le débit de ce liquide.

Plus généralement, elle concerne l'utilisation du capteur de gaz selon l'invention pour contrôler le débit de fluide aux entrées et/ou sorties d'une puce micro fluidique.

Selon un autre aspect non-revendiqué, le système de mesure de débit micro fluidique d'un liquide dans un circuit micro fluidique comporte.

- un réservoir partiellement rempli de ce liquide et surmonté d'un ciel gazeux,
- des moyens pour maintenir la pression du gaz du ciel gazeux à une valeur prédéterminée P1,
- des moyens pour prélever du liquide dans le réservoir et pour le délivrer en sortie à une pression P2 inférieure à P1,
- des moyens capteurs de pression dont une première entrée est reliée au ciel gazeux et dont une seconde entrée est reliée à la sortie de liquide à pression P2, la sortie des moyens capteurs de pression délivrant un signal fonction de la différence des pressions (P1-P2) qui est représentative du débit de liquide à pression P2 délivré au circuit micro fluidique.

Ainsi, une méthode de mesure rapide et précise d'un débit de liquide sortant d'un réservoir sous pression, utilisant une mesure unique de pression au niveau du liquide est proposée.

Cette mesure est réalisée à la sortie du réservoir de liquide à distribuer dans le circuit micro fluidique situé en aval du réservoir. La pression du liquide dans le réservoir est contrôlée à l'aide d'un gaz sous pression placé de préférence au dessus du liquide et formant un ciel gazeux au dessus de ce liquide et de moyens de perte de charge tels qu'une canalisation de préférence sous la forme d'une restriction produisant une perte de charge lorsque le liquide circule dans celle-ci. La mesure de débit est réalisée à l'aide d'un moyen de mesure de la différence entre la pression P1 du gaz, mesurée dans le réservoir et la pression P2 du liquide mesurée en aval de la restriction de résistance hydraulique Rh. Le débit D sortant de la restriction suit la loi : $D=(P1-P2)/Rh$ (le terme « restriction » signifie selon l'invention, une canalisation ou tout autre moyen provoquant une perte de charge lors de l'écoulement du liquide dans cette restriction ou d'une manière plus générale, après passage au travers de moyens de perte de charge, les deux termes étant employés indifféremment). La différence de pressions (P1-P2) est traduite par des moyens de mesure de pression adaptés, en un signal (par exemple électrique) d'amplitude (par exemple) proportionnelle au (ou fonction du) débit sortant de la restriction.

La résistance hydraulique Rh sera de préférence selon l'invention supérieure à $1,2 \times 10$ puissance 10 $Pa.s.L^{-1}$ afin de maintenir le débit de liquide micro fluidique dans une gamme de pressions raisonnables. Avantageusement, cette résistance sera constituée d'un tube capillaire cylindrique de diamètre intérieur inférieur à environ 300 $\mu m$ et/ou d'un canal micro fluidique intégré dans une puce micro fluidique, de préférence de section carré et de hauteur inférieure à environ 300 $\mu m$.

La cavité dans laquelle est logé un élément sensible à la pression (senseur de pression) et dans laquelle transite de préférence le liquide à pression P2 aura de préférence un faible volume interne, plus préférentiellement inférieur à 50 $\mu L$, afin de limiter les temps de remplissage et/ou de transfert de liquide.

Dans la présente description, le terme « moyens de mesure de la pression » désigne un ensemble d'un ou plusieurs « capteurs de pression » ainsi que leur électronique de commande et/ou un ordinateur spécialement configuré pour effectuer les opérations équivalentes, permettant (selon les variantes de réalisation de l'invention) d'effectuer la mesure de pression du liquide et/ou du gaz et de délivrer en sortie un signal proportionnel à (P1-P2).Ces moyens comportent des « moyens capteurs de pression » qui sont constitués d'un ou plusieurs « capteurs de pression » qui désignent un ensemble mécanique dans lequel le fluide (gaz ou liquide) circule jusque dans une cavité dans laquelle est placé un élément sensible à la pression (« senseur de pression ») qui transforme la pression exercée par le fluide sur cet élément en un signal, généralement électrique.

Les moyens capteurs de pression peuvent prendre différentes formes : ils peuvent être constitués par deux capteurs de pression, dont la différence entre les pressions mesurées est calculée par exemple à l'aide d'un circuit électronique différentiateur ou un ordinateur spécialement configuré pour calculer le débit de liquide sortant de la restriction, en appliquant la formule ci-dessus.

Le procédé de mesure de débit a l'avantage d'utiliser un unique élément de mesure en contact avec le liquide en aval de la restriction, cet élément pouvant être de constitution simple et bon marché.

Selon un exemple non-revendiqué, la restriction n'est pas disposée dans le capteur de pression du liquide, mais en amont de celui-ci dans une portion de circuit de liquide qui n'est pas encore micro fluidique (c'est à dire qui a un diamètre de canalisation supérieur à environ 23 micromètres, diamètre couramment utilisé en micro fluidique) ce qui permet d'utiliser une restriction de taille (diamètre) plus importante que lorsque celle-ci fait partie du réseau micro fluidique, (de préférence supérieur à 50 μm plus préférentiellement supérieur à 100 μm) limitant ainsi le risque de bouchage de la restriction et donc du circuit micro fluidique. Le diamètre du capillaire utilisé est très dépendant de la gamme de débit de liquide micro fluidique que l'on veut mesurer, sachant que le débit dans le capillaire évolue à la puissance 4 du diamètre du capillaire. Un diamètre de capillaire de 23 micromètres correspond à une échelle de mesure de débit d'eau d'environ 1 microlitre par minute pour un capillaire de longueur 135 mm, ce qui correspond aux capteurs de débit les plus sensibles disponibles commercialement à ce jour. Ainsi cet exemple permet de multiplier par trois environ le diamètre de la résistance iso-débit, ce qui est un avantage considérable pour éviter le bouchage de la restriction.

Pour toutes ces raisons, le système de mesure de débit selon l'invention permet de réaliser un très bon compromis entre fiabilité, rapidité et précision tout en conservant un coût peu élevé.

Les moyens de mesure de pression peuvent être constitués selon une variante non-revendiquée par un ensemble de deux capteurs de pression Px chacun délivrant un signal Sx numérique ou analogique représentatif de la pression du gaz ou de la pression du liquide, le calcul de la différence d'amplitude entre les signaux étant réalisée, de manière connue en soi, à l'aide d'un calculateur dans le cas de signaux numériques ou un circuit soustracteur dans le cas de signaux analogiques.

Parmi les capteurs de pression de liquide, on pourra utiliser le capteur de pression selon l'invention (qui sera décrit ci-après). On pourra également utiliser des capteurs de pression différentiels pour mesurer la différence de pression entre gaz et liquide selon une variante de capteur selon l'invention.

Ainsi selon un mode préférentiel de réalisation du système selon l'invention, la différence de pression peut être également mesurée à l'aide d'un capteur de pression différentiel. Ce mode de réalisation permet de n'utiliser qu'un seul capteur de pression et de s'affranchir notamment de la mesure de la valeur absolue de la pression du liquide et du gaz. On peut alors utiliser un capteur adapté à la mesure d'une gamme de pression plus faible ce qui rend la mesure de la différence de pression plus précise.

Selon une autre variante de réalisation de l'invention non-revendiquée, les moyens capteurs de pression peuvent également utiliser le même signal que celui utilisé pour réguler la pression du gaz dans le réservoir à l'aide d'un régulateur de pression réglable.

Selon encore une autre variante de réalisation de l'invention non-revendiquée, la mesure de la pression en amont de la restriction, et par conséquent la mesure du débit de liquide, peut être corrigée par la hauteur de liquide dans le réservoir qui induit une différence de pression hydrostatique parasite ne provenant pas de la perte de charge à travers la résistance hydraulique Rh. Par exemple, la hauteur de liquide peut être maintenue fixe à une valeur connue prédéterminée, mesurée avec un capteur ou déduite à partir d'une hauteur initiale de liquide dans le réservoir et du débit cumulé sortant du réservoir.

Selon une autre variante de l'invention non-revendiquée la mesure de débit est utilisée pour contrôler précisément et rapidement le débit de liquide micro fluidique, à l'aide d'un générateur de pression de gaz réglable et d'un système de contrôle asservissant le débit du liquide à une valeur de consigne (éventuellement réglable) à l'aide par exemple d'un circuit de type PID.

En général, le gaz constituant le ciel gazeux au dessus du liquide sera généralement de l'air comprimé, éventuellement appauvri en oxygène (c'est à dire comportant moins de 21% en volume d'oxygène) (de préférence débarrassé de ses impuretés solides et/ou liquides à l'aide de filtres adaptés, tels que ceux utilisés pour filtrer l'atmosphère des salles blanches). Lorsque le liquide sera sensible à l'oxydation et/ou comportera des éléments susceptibles d'être modifiés par la présence d'oxygène (ou tout agent oxydant) à son contact, on utilisera de préférence comme gaz constituant le ciel gazeux au dessus du liquide (et permettant de « pousser » le liquide vers le circuit micro fluidique) un gaz inerte choisi parmi l'azote, l'argon, les gaz rares (Kr, Xe, Ne, ...) et/ou leurs mélanges.

L'invention sera mieux comprise à l'aide des exemples de réalisation suivants donnés conjointement avec les figures qui représentent :

La figure 1, une première représentation schématique du système de mesure de débit de liquide micro fluidique selon l'invention,

La figure 2, une seconde représentation schématique du système de mesure de débit de liquide micro fluidique selon l'invention

La figure 3, une troisième représentation schématique du système de mesure de débit de liquide micro fluidique selon l'invention

La figure 4, une représentation schématique d'un système de contrôle du débit de liquide micro fluidique selon l'invention,

La figure 5, un exemple schématique de mesure de débit de liquide micro fluidique selon l'invention,

La figure 6, un exemple de contrôle de débit de liquide micro fluidique selon l'invention,

Les figures 7a et 7b, respectivement une vue en coupe d'un capteur de débit et d'un capteur de débit différentiel selon l'invention,

La figure 8, une vue en coupe d'un système réservoir muni d'un tube capillaire et d'un capteur de débit selon la figure 7a.

La figure 9 représente une courbe de débit du liquide en fonction de la différence de pression liquide-gaz.

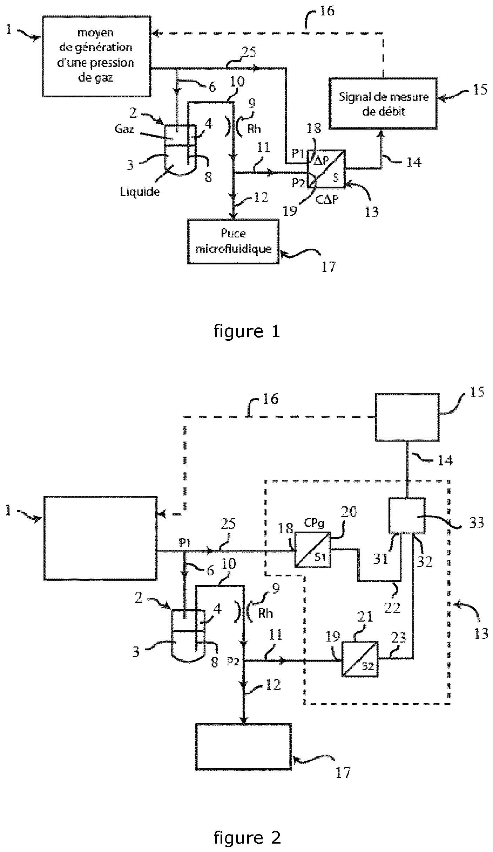

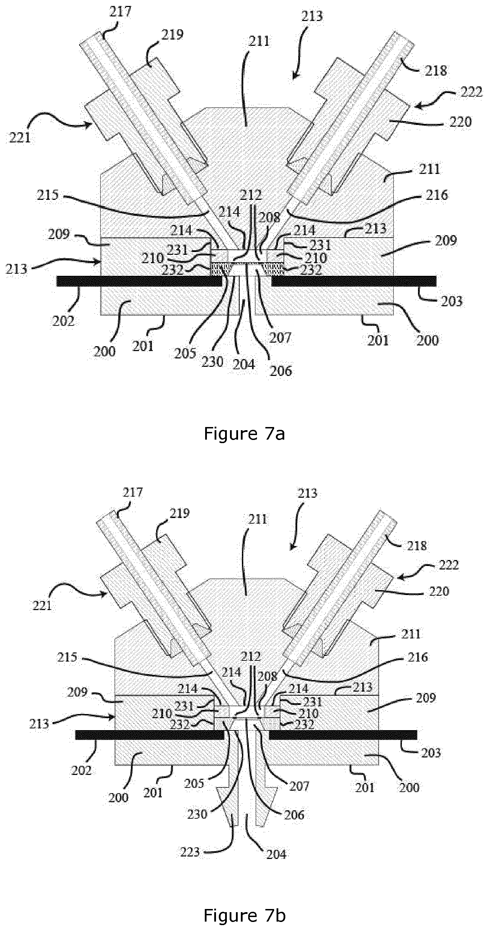

Sur la figure 1, des moyens pour engendrer un gaz sous pression contrôlée 1 (source d'air comprimé par exemple dont la pression est régulée et de préférence contrôlable ou bouteille d'azote sous pression sur laquelle est branché un détendeur/régulateur de pression) sont reliés d'une part par la canalisation 6 à la partie supérieure 4 (ou ciel gazeux) du réservoir 2 dont la partie inférieure est remplie de liquide 3 (à faire circuler dans la puce micro fluidique 17) en contact avec le gaz du ciel gazeux 4 et d'autre part par la canalisation 25 à une première entrée 18 d'un capteur de pression différentielle 13. Plongeant dans le liquide 3 se trouve une canalisation 8 sortant du réservoir 2 et se prolongeant par la canalisation 10 qui comporte une restriction 9 ayant une résistance hydraulique Rh (en pratique, les éléments 8, 9 et 10 peuvent être regroupés en un seul élément, par exemple un tube capillaire plongeant dans le liquide 3 de résistance hydraulique Rh, la pression du liquide 3 étant égale à P2 à la sortie du capillaire) et qui se prolonge ensuite d'une part par la canalisation 11 reliée à une seconde entrée 19 du capteur de pression différentielle 13 et d'autre part par une canalisation micro fluidique 12 dont l'extrémité vient alimenter le circuit (ou « puce ») micro fluidique 17. Le capteur de pression différentielle 13 (dont un exemple de réalisation sera décrit ci-après sur la figure 7) engendre un signal électrique S sur la ligne 14, dont l'amplitude est proportionnelle à la différence des pressions (P1-P2) ce signal étant transformé en un signal de mesure du débit de liquide 3 à la sortie de la restriction 9 dans les moyens de calcul de débit de liquide 15 de la manière explicitée ci-après (ou dans un ordinateur spécialement configuré à cet effet). Ce signal de mesure de débit de liquide 15 peut être par exemple affiché sur un afficheur numérique (non représenté sur la figure 1) et/ou utilisé (via la ligne en pointillés 16 sur la figure 1) pour contrôler/réguler la pression du gaz 4 via les moyens 1. Ainsi en mesurant la différence de pression entre la pression du gaz constituant le ciel gazeux au dessus du liquide 3 dans le réservoir (qui est donc égale à la pression du liquide 3 à l'interface gaz/liquide dans le réservoir 2) et la pression du liquide après avoir traversé la restriction 9 on peut mesurer le débit de liquide 3 en appliquant simplement la formule :

$$\text{Débit de liquide} = (P1-P2)/Rh,$$

les pressions étant exprimées en Pascal, la résistance hydraulique en $Pa.s.L^{-1}$ et le débit de liquide en L/s.

Le débit de liquide 3 à l'entrée de la puce micro fluidique 17 peut ainsi être simplement contrôlé en faisant varier la pression P1 du générateur de gaz sous pression contrôlée 1 grâce au détendeur/ régulateur de pression disposé en sortie de ce générateur.

La résistance hydraulique sera de préférence supérieure à 1,2x10 puissance 10 $Pa.s.L^{-1}$. Selon un mode préférentiel de réalisation, la résistance hydraulique Rh sera constituée par un capillaire cylindrique de diamètre intérieur de préférence inférieur à 300 μm et/ou

par un canal micro fluidique intégré dans une puce de section carré et de hauteur inférieure à 300 μm.

Le moyen de mesure de la pression de liquide comportera de préférence un faible volume de liquide interne, de préférence inférieur à 50 μL pour limiter les temps de remplissage et transfert de liquide.

La figure 2 est une variante du système représenté schématiquement sur la figure 1. Sur cette figure ainsi que sur toutes les autres figures, les mêmes éléments portent les mêmes références et remplissent les mêmes fonctions. Sur cette figure 2 le capteur de pression différentielle 13 est constitué de 2 capteurs de pressions 20 et 21, dont la différence des valeurs de pression respectivement mesurées est calculée par exemple à l'aide d'un circuit électronique différentiateur ou un calculateur numérique spécialement configuré 33.

N'importe quel type de capteur de pression bien connu de l'homme de métier pouvant mesurer la pression d'un fluide (gaz ou liquide) peut être utilisé pour mesurer l'amplitude des pressions P1 ou P2, dans la mesure où il délivre un signal S, de préférence électrique, dont la valeur est fonction de (par exemple proportionnelle à) l'amplitude de la pression mesurée. Ainsi le capteur 20 reçoit le gaz 4 directement sur son entrée 18 et délivre un signal analogique (ou numérique) S1 sur la ligne 22 à une première entrée 31 d'un circuit différentiateur 33 (ou respectivement un calculateur spécialement configuré pour réaliser l'opération de soustraction) dont la sortie 34 est reliée à l'entrée des moyens de calcul de débit 15 (comportant ou non un afficheur numérique) via la ligne 14. La seconde entrée 32 du circuit 33 reçoit le signal S2 délivré sur la ligne 23.

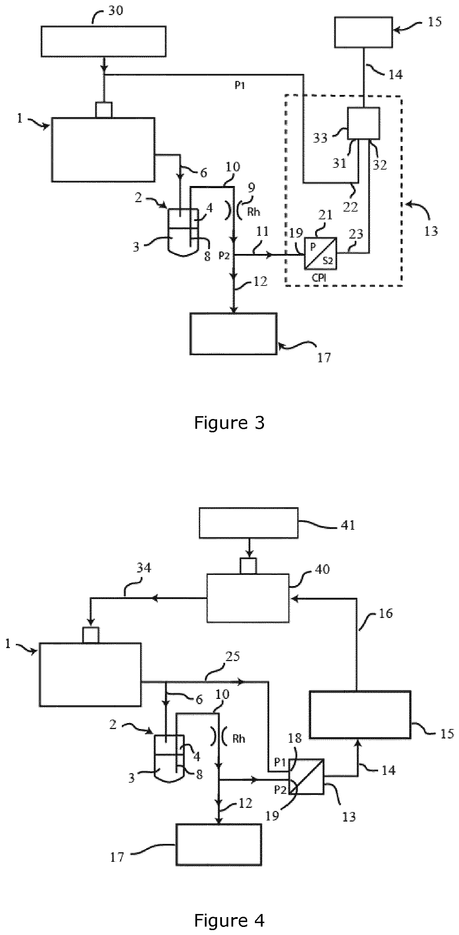

La figure 3 est une autre variante de réalisation du système de la figure 2, dans laquelle on prévoit des moyens de consigne de pression 30 qui engendrent un signal de consigne de pression aux moyens 1 pour engendrer un gaz sous pression (ici ces moyens engendrent une pression variable et contrôlée en fonction de la valeur de consigne), ce signal de consigne de pression permettant d'une part de réguler la pression du gaz à la valeur voulue P1 et d'autre part via la ligne 22 de fournir à l'entrée 31 du circuit ou calculateur 33 un signal dont l'amplitude(par exemple) est celle de la pression P1 du gaz. Les autres éléments du système de la figure 2 restent inchangés sur cette figure 3.

La figure 4 est une variante de la figure 1 dans laquelle on a intercalé des moyens de contrôle de débit 40 entre les moyens 15 et les moyens 1, ces moyens de contrôle recevant par la ligne 16 le signal de mesure du débit de liquide et ajustant l'amplitude ou la valeur de celui-ci en fonction des moyens de consigne de débit 41, et délivrant via la ligne 34 un signal de consigne de pression aux moyens 1 (ce signal de consigne de pression ayant une amplitude ou une valeur calculée en utilisant la formule du débit en fonction des pressions rappelée ci-dessus).

Selon une variante de mise en œuvre, la mesure de débit peut être corrigée par la hauteur de liquide dans le réservoir qui induit une différence de pression hydrostatique parasite ne provenant pas de la perte de charge à travers la résistance hydraulique Rh. La hauteur de liquide peut être par exemple maintenue fixe et connue à priori, mesurée avec un capteur ou déduite à partir d'une hauteur initiale et du débit cumulé sortant du réservoir.

Avantageusement, cette méthode de mesure de débit peut être utilisée pour contrôler précisément et rapidement un débit liquide micro fluidique à l'aide d'un générateur de gaz de pression réglable et d'un système de contrôle 40 asservissant le débit suivant une consigne (par exemple PID).

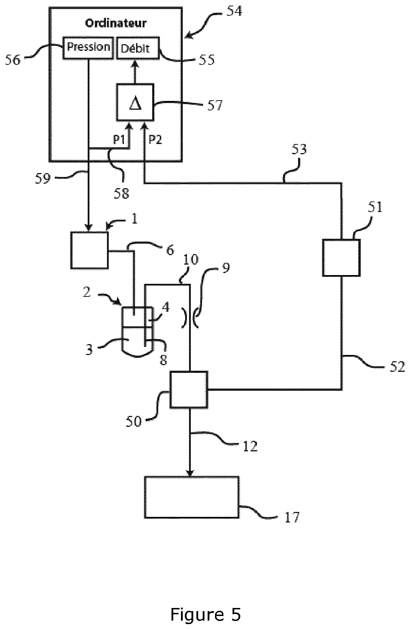

Sur la figure 5 est représenté un premier exemple pratique de réalisation du système selon l'invention, dans lequel les moyens 1 sont un contrôleur de pression vendu sous la dénomination commerciale ELVEFLOW OB1 (ELVEFLOW est une marque déposée par la société ELVESYS) agissant dans une plage de pression(relative) de 0 à 2 bars (0 à 2x10 puissance 5 Pascal) qui contrôle la pression du gaz issu d'une source de gaz (non représentée sur la figure) à la valeur voulue. Les moyens de restriction de pression 8, 9, 10 sont constitués par un tube capillaire en matériau thermoplastique par exemple du type polyéthéréthercétone (ou PEEK) de diamètre intérieur égal à 150 micromètre et de longueur 0,135 m plongé par une première extrémité dans le liquide 3 et alimentant par son autre extrémité un capteur de pression du liquide 50 de type « traversant » tel que décrit ci-après sur la figure 7 délivrant à sa sortie sur la canalisation 12 le liquide 3 à un débit qui peut varier entre 0 et 1,15 mL/min. Ce capteur 50 délivre également un signal électrique analogique proportionnel à la pression P2, via la ligne 52 au module d'acquisition 51 de dénomination commerciale « Elveflow SensorReader » qui transforme le signal analogique en signal numérique représentant la valeur de la pression P2 et envoie cette information via la ligne 53 à l'ordinateur 54 spécialement configuré pour réaliser les opérations qui vont être décrites ci-après. L'ordinateur 54 reçoit également par la ligne 58 une information sous forme numérique représentant la valeur de la pression P1 imposée au ciel gazeux 4 via les moyens 1 et 5 et la ligne 59 qui transmet la valeur de consigne de la pression P1 aux moyens 1. L'ordinateur réalise les opérations de soustraction des pressions P1 et P2 puis de calcul de débit associé (comme expliqué ci-avant) et d'ajout éventuel de coefficients multiplicateurs afin d'obtenir (et d'afficher si nécessaire) le débit de liquide 3 (qui sera injecté dans le circuit micro fluidique 17) à l'aide des moyens 55. Dans cet exemple précis, la consigne de pression pour les moyens 1 est inscrite dans la mémoire 56 de l'ordinateur 54, par exemple à l'aide du clavier alphanumérique relié à l'ordinateur 54.

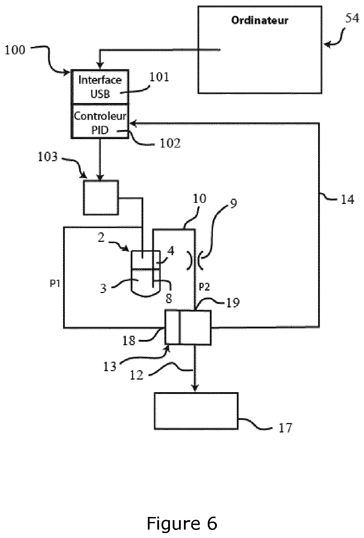

La figure 6 est un exemple de réalisation de l'invention permettant de rapidement contrôler le débit du liquide 3 dans le circuit micro fluidique 17. Comme sur la figure 5 on utilise le même capillaire en PEEK de diamètre intérieur 150 microns et de longueur 0,135 m pour créer une restriction de résistance hydraulique Rh. Le capteur de pression différentielle 13 tel que décrit ci-après sur la figure 7b est utilisé ici, avec les entrées gaz et liquide, respectivement 18 et 19, le liquide 3 passant au contact de la membrane du capteur piézo résistif et ressortant par la canalisation 12 en direction du circuit micro fluidique. Le gaz est au contact de la membrane du côté opposé au liquide et maintient ainsi une pression sur celle-ci opposée à la pression exercée par le liquide de l'autre côté de celle-ci. Il en résulte au niveau des électrodes du capteur 13 un signal électrique envoyé via la ligne 14 à l'entrée d'un contrôleur de type PID 102 qui envoie un signal de consigne de pression au contrôleur de pression 1 afin de réguler la pression P1 du gaz 4. Le contrôleur PID 102 est une partie des moyens électroniques de contrôle 100, qui globalement permettent d'assurer le contrôle de pression du gaz à l'aide du signal issu du capteur 13 et une consigne de débit engendrée par l'ordinateur 54 spécialement configuré pour cette tâche, consigne de débit transmise au contrôleur PID 102 via une interface 101 de type USB. Avec une telle configuration, on a constaté qu'il était possible d'obtenir un temps de mise en place d'un débit contrôlé en moins de 100 ms.

La figure 7a est une vue en coupe du capteur de pression selon l'invention. Le capteur 213 possède une partie inférieure 200 et une partie supérieure 211. La partie inférieure 200 comporte une face inférieure 201 et une face supérieure 230. Un espace 207 est délimité par la face supérieure 230 et par la face inférieure de la membrane 206 de faible épaisseur d'un capteur piézorésistif et latéralement par une couronne 205 plus épaisse que la membrane, prolongeant la membrane 206 et solidaire de celle-ci de manière à la supporter. La membrane 206 déformable sous l'action d'un fluide sous pression, est une membrane souple en silicium supportée par une couronne plus épaisse 205, l'ensemble intégrant les moyens de mesure de la déformation de la membrane 212 qui comportent des éléments sensibles à la déformation de la membrane tels que des éléments réalisés en un matériau piézo-résistif. La partie inférieure de cette couronne 205 s'appuie d'une part sur la face supérieure 230 de la partie inférieure 200, de manière à délimiter latéralement l'espace 207, et d'autre part sur les extrémités des électrodes 202, 203 encastrées dans cette face supérieure 230 (ou simplement posées sur celle-ci). Entre les électrodes 202 et 203 et la couronne 205, peut être disposé un élément conducteur électrique tel qu'un joint ou une colle conductrice (qui n'est pas représenté sur la figure) permettant la connexion électrique des éléments sensibles. Au dessus de cette surface 230 est disposé un support 209 (qui peut être d'un seul tenant avec la partie inférieure 200) comportant une ouverture traversante sur la paroi latérale 231 de laquelle vient s'appuyer la face latérale 232 de la couronne 205. La face supérieure de la membrane 206 se prolonge sur la partie supérieure de la couronne 205 formant une seule surface plane jusqu'à la paroi latérale 231 (En pratique, les éléments 205 et 206 sont réalisés dans le même bloc de silicium par gravure, comme décrit dans le document de N.K.BATH cité ci-dessus, en page 121) sur laquelle vient s'appuyer un joint d'étanchéité 210 en forme de couronne carrée délimitant une cavité 208 placée sensiblement au dessus de la membrane 206 et débouchant sur celle-ci. L'espace 207 donne le débattement nécessaire à la membrane 206 lorsque celle-ci se creuse sous l'effet de la force exercée par le liquide à pression P2 sur la membrane 206. Il est à noter que l'espace 207 qui dispose d'un évent 204 de sortie de l'air emprisonné dans cet espace reste en communication fluidique avec l'environnement extérieur afin d'y maintenir une pression toujours égale à la pression atmosphérique, quelle que soit la pression exercée par la membrane. Cet évent peut également être relié (via une canalisation non représentée sur la figure par exemple) à une source de gaz (air, gaz inerte, ...) ayant une pression égale ou différente de la pression atmosphérique. Lorsque le gaz est à pression atmosphérique, le capteur permet de mesurer la pression relative du liquide (et non sa pression absolue). Lorsque la pression de ce gaz est différente de la pression atmosphérique, le capteur permet de mesurer une différence de pression entre le liquide et le gaz.

Le capteur 213 possède une partie supérieure 211 (support de conduite) dont la face inférieure comporte une partie en saillie 214 qui vient se loger au sommet de l'ouverture délimitée par la paroi latérale 231 en s'appuyant latéralement sur le joint 210 et venant fermer de manière étanche aux fluides (notamment liquides) la cavité 208.

Débouchant dans cette cavité 208 dans sa partie supérieure se trouvent deux canalisations respectivement 215 et 216 qui s'étendent à 45° environ vers l'extérieur de la partie supérieure 211 par l'intermédiaire des connecteurs micro fluidiques 10/32 UNF et leurs férules respectives 221 et 222 et des tubes capillaires micro fluidiques 217 et 218 qui traversent respectivement les corps 219 et 220 des connecteurs qui se vissent par exemple dans le support de conduite 211 afin d'assurer l'étanchéité fluide. En utilisation, on injecte le liquide à pression P2 par la canalisation 215 qui vient remplir la cavité 208 puis ressort par la canalisation 216 (ou vice-versa) en direction du circuit micro fluidique 17 et qui exerce une poussée (vers le bas sur la figure) sur la face supérieure de la membrane 208 proportionnelle à la pression P2. De cette manière on récupère ainsi grâce à la membrane 206 un signal électrique sur les électrodes 202, 203 dont l'amplitude est proportionnelle à la pression P2 du liquide (bien entendu , au lieu d'un liquide on peut utiliser un fluide quelconque) Pour plus de détails sur ce type de membranes on pourra se reporter par exemple à l'article de K.N.BATH précité.

La figure 7b est une vue en coupe du capteur de pression différentielle selon l'invention, semblable à celui décrit sur la figure 7a mais dont l'ouverture 204 est munie dans sa partie inférieure d'un connecteur fluidique 223 pour recevoir un second fluide, de préférence un gaz, de préférence sous pression, dans l'espace 207. Le capteur 213 possède une partie inférieure 200 et une partie supérieure 211.

La partie inférieure 200 comporte une face inférieure 201 percée sensiblement en son centre d'un conduit 204 de fluide (de préférence un gaz, tel que le gaz 4) débouchant dans une cavité 207 délimitée dans sa partie supérieure par la face inférieure de la membrane 206 et latéralement maintenu par une couronne 205 prolongeant la membrane 206 et solidaire de celle-ci. La partie inférieure de cette couronne 205 s'appuie sur la face supérieure 230 de la partie inférieure 200, de manière à créer la cavité 207 et entourer l'extrémité supérieure du conduit 204, ainsi que sur les extrémités des électrodes 202, 203 encastrées dans cette face supérieure 230 (ou simplement posées sur celle-ci). Au dessus de cette surface 230 est disposé un support 209 (qui peut être d'un seul tenant avec la partie inférieure 200) comportant une ouverture traversante sur la paroi latérale 231 de laquelle vient s'appuyer la face latérale 232 de la couronne 205. La face supérieure de la membrane 206 se prolonge sur la partie supérieure de la couronne 205 formant une seule surface plane jusqu'à la paroi latérale 231, sur laquelle vient s'appuyer un joint d'étanchéité 210 en forme de couronne, délimitant une cavité 208 placée sensiblement au dessus de la membrane 206 et débouchant sur celle-ci. Le capteur 213 possède une partie supérieure 211 (support de conduite) dont la face inférieure comporte une partie en saillie 214 qui vient se loger au sommet de l'ouverture traversante délimitée par la paroi latérale 231 en s'appuyant latéralement sur le joint 210 et venant fermer de manière étanche aux fluides (notamment liquides) la cavité 208.

Débouchant dans cette cavité 208 dans sa partie supérieure se trouvent deux canalisations respectivement 215 et 216 qui s'étendent à 45° environ vers l'extérieur de la partie supérieure 211 par l'intermédiaire des connecteurs micro fluidiques 221 et 222 et des tubes capillaires micro fluidiques 217 et 218 qui traversent respectivement les « bouchons » 219 et 220 qui se vissent par exemple dans le support de conduite 211 afin d'assurer l'étanchéité fluide. En utilisation, on injecte par exemple le gaz à pression P1 de manière étanche dans la conduite 204 qui vient exercer une poussée sur la face inférieure de la membrane 206 et on injecte le liquide à pression P2 par la canalisation 215 qui vient remplir la cavité 208 puis ressort par la canalisation 216 (ou vice-versa) en direction du circuit micro fluidique 17 et qui à l'équilibre exerce une poussée de sens opposé sur la face supérieure de la membrane 208 proportionnelle à la pression P2. De cette manière on récupère ainsi grâce aux moyens de mesure de la déformation de la membrane 212 qui comportent des éléments sensibles piezo-résistif, un signal électrique sur les électrodes 202, 203 dont l'amplitude est proportionnelle à (ou fonction de) la différence P1-P2 des pressions des fluides.

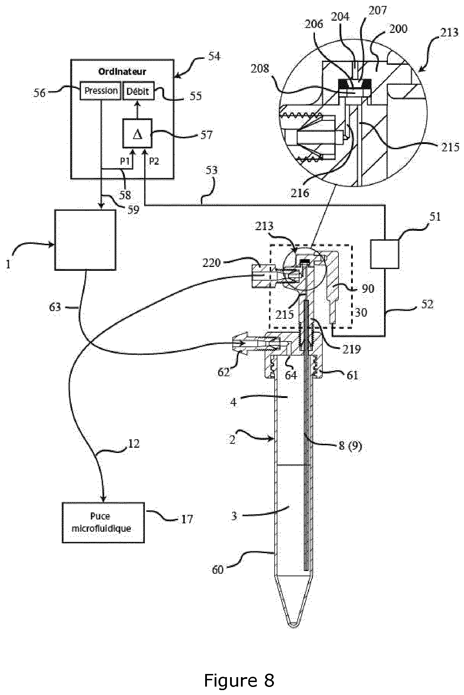

La figure 8 décrit un exemple de réalisation de l'invention tel que représenté sur la figure 5 avec intégration d'un capteur de débit fluide et d'un réservoir de fluide (liquide). Le réservoir 2 se compose d'un corps 60, ayant ici une forme cylindrique, fermé à sa partie inférieure et recouvert à son extrémité supérieure par un bouchon 61 qui vient le refermer hermétiquement et sur lequel est connecté latéralement un connecteur fluide 62 auquel est relié à une première extrémité à une canalisation fluidique (et non micro fluidique de préférence) 63 elle-même reliée au contrôleur de pression de gaz 1 (de type Elveflow OB1 agissant dans la gamme de pression relative 0-2x10 puissance 5 Pascal), et à une seconde extrémité par la canalisation 64 à la partie supérieure du réservoir 2 correspondant au ciel gazeux 4 lorsque ce réservoir est partiellement rempli de liquide 3 dans sa partie inférieure. Dans cet exemple, la résistance Rh 8 prend la forme d'un capillaire en un matériau tel que le Polyetherethercétone ou PEEK, de 150 $\mu$m de diamètre intérieur, disposé de préférence sensiblement parallèlement à la paroi du corps 60 de façon à plonger dans le liquide 3 et faire remonter celui-ci dans le capillaire 8 sous l'effet de la pression imposée en fonctionnement à la surface du liquide 3 par le gaz 4 sous pression. Ce gaz doit être de préférence un gaz « propre » tel qu'utilisé dans les salles blanches (débarrassé de particules et/ou d'impuretés chimiques et/ou physiques) afin d'éviter la contamination du liquide 3 destiné au circuit micro fluidique 17. Ce gaz sera de préférence de l'air comprimé mais pourra également être un gaz inerte tel que décrit ci-avant lorsqu'on veut éviter une interaction possible entre l'oxygène de l'air et le liquide 3 (de préférence de l'azote et/ou de l'argon en bouteille de qualité appropriée mais également de l'air appauvri en oxygène(moins de 1% à 10% volume d'oxygène), éventuellement fourni par un générateur sur site du type « membrane » ou par adsorption. Ce gaz peut également si nécessaire être débarrassé de toutes ses impuretés minérales et/ou organique à l'aide de filtres adéquats (utilisés par exemple pour filtrer l'atmosphère des salles blanches). Le tube capillaire 8 traverse également de façon étanche le bouchon 61 du réservoir 2 et pénètre par l'intermédiaire du connecteur fluide 219 dans le circuit d'entrée de liquide du capteur 213, c'est à dire la canalisation 215 qui prolonge le capillaire 8 puis la cavité de mesure de pression du liquide 208 , puis la canalisation de sortie 216 vers le connecteur de sortie capillaire 220 dans lequel vient se connecter la canalisation 12 alimentant le circuit micro fluidique 17. La partie inférieure 200 du capteur 213 (ici en position supérieure) relie électriquement les électrodes 202, 203 du capteur par l'intermédiaire du connecteur électrique 90 et la ligne 52 au module d'acquisition de données de dénomination commerciale Elveflow SensorReader 51, lui-même relié électriquement par la ligne 53 à l'ordinateur 54 (se reporter à la figure 5 pour le traitement des données par l'ordinateur 54 spécialement configuré). L'intégration de l'élément capteur de pression en silicium contenant une membrane se déformant en réponse à la pression exercée par le liquide couplée à une jauge piezo résistive permettant de transformer cette déformation en un signal électrique est ici optimisée de manière à limiter le volume de la cavité de mesure 208 à quelques microlitres. Le chemin du fluide (liquide 3) dans le capteur selon l'invention est tel qu'il n'y a pas de volume mort au niveau du capteur (l'entrée du liquide et la sortie du liquide de la chambre de mesure sont réalisés grâce à des canalisations différentes) de manière à éviter la formation de bulles.

L'ordinateur 54 est spécialement configuré pour calculer le débit de liquide 3 : pour cela, l'ordinateur calcule la différence de pression entre la pression de gaz appliquée P1 dans le réservoir à l'aide d'un contrôleur de pression de type Elveflow OB1 et le capteur de pression intégré dans le capuchon du réservoir qui mesure la pression du liquide en sortie du réservoir 2 puis en déduit le débit de liquide dans le circuit à l'aide de l'équation D=(P1-P2)/Rh de la manière décrite précédemment.

Un exemple d'utilisation de l'invention telle que décrite sur cette figure 8 consiste à perfuser un milieu de culture cellulaire dans une chambre micro fluidique (17) où sont cultivées des cellules vivantes (cellules de mammifère, levure ou autres) pour contrôler précisément la vitesse de renouvellement en nutriments apportés par le liquide 3 dans la chambre 17 d'une part et le cisaillement mécanique sur les cellules produit par le débit de perfusion, qui peut être délétère pour les cellules, d'autre part.

Une autre application de cette mise en œuvre est la perfusion d'un ou plusieurs réactifs dans un réacteur chimique en flux continu réalisé dans une puce micro fluidique Dans ce cas, les débits ont besoin d'être contrôlé précisément pour respecter la stœchiométrie de la réaction.

Dans une troisième application, la mesure du débit peut être un moyen de contrôler que les conduits d'un puce micro fluidique ne se bouchent pas lors de leur utilisation. En effet, lorsqu'une canalisation micro fluidique se bouche alors que des pressions constantes sont appliqués aux liquides entrant dans ces canalisations, le débit chute, ce qui peut être détecté simplement et à faible cout.

Dans une dernière application, le contrôle de débit est utilisé pour réaliser des gouttes à cadence élevée (de l'ordre de 1000 goutes par seconde) à l'aide d'un puce micro fluidique et en utilisant un mélange de plusieurs réactifs comme liquide pour former la goutte. Ce type de générateur de goutte est utile pour réaliser automatiquement des diagrammes de phase de réaction suivant plusieurs dimensions, ce qui demande de tester un nombre très important de combinaisons de concentration de réactifs. Ce peut être utile par exemple en cristallographie pour tester les conditions de cristallisation d'une protéine en variant indépendamment pH, concentration de protéine et force ionique. Ou encore en chimie organique pour connaitre les concentrations de deux réactifs et un catalyseur qui soient optimum pour obtenir le meilleur rendement. Etc.

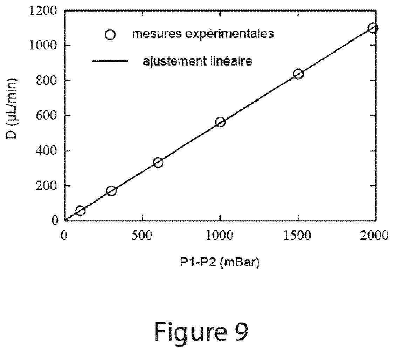

Pour évaluer la précision de la mesure de débit réalisée dans l'exemple de réalisation de l'invention montré en figure 8, nous avons comparé la différence de pression P1-P2 mesuré par le dispositif présenté en figure 8 avec une mesure de débit indépendante réalisée par mesure de la masse de liquide perfusée pendant un certain temps. Cette méthode permet également de calculer précisément la valeur de la résistance Rh qui permet de calculer le débit D à partir de la différence de pression P1-P2. Dans cette expérience présentée en figure 9, une pression fixe P1 est imposé par un contrôleur de pression de gaz 1 (de type Elveflow OB1 agissant dans la gamme de pression relative 0-2 bar) relié latéralement à un réservoir 2 de 50 mL par l'intermédiaire d'une canalisation 63 reliée à un bouchon 61 qui recouvre hermétiquement le réservoir comme montré en figure 8. Ce réservoir contient de l'eau filtrée sur laquelle vient s'appliquer la pression générée par le contrôleur de pression de gaz 1. Dans cet exemple, le tube capillaire 8, ici en Polyetherethercétone ou PEEK a un diamètre intérieur de 0,135 m de long, est placé de tel sorte qu'une de ses extrémités soit plongée dans le liquide 3 sur lequel la pression P1 est appliquée et que l'autre extrémité soit à la pression P2 mesurée par le capteur de pression 50 et donne à travers un tube capillaire 12 sur un réservoir de sortie permettant d'accumuler le liquide perfusé. Pour obtenir la figure 9, une pression constante P1 est appliquée par le contrôleur de pression de gaz 1 pendant un temps t variant de 360 s. pour les plus grands débits à 1500 s. pour les plus petits débits (La durée de mesure étant ajustée afin d'obtenir une meilleur précision). Pendant ce temps t, la différence de pression P1-P2 qui est constante est mesurée pendant que le réservoir de sortie se remplit progressivement (P1 est ici le signal utilisé pour contrôler le contrôleur de pression 1 et P2 est le signal issu du capteur 213). Une fois le temps t écoulé, les réservoirs sont pesés sur une balance de précision, d'abord rempli du liquide qui a été amené par la pression durant la durée de l'expérience puis vidés et séchés afin de connaitre précisément le poids du tube. La différence entre ces deux mesures donne très précisément la masse m de liquide perfusé pendant le temps t, dont on déduit le débit perfusé D avec la formule D = m/(rho.t) ou rho est la densité du liquide (pour l'eau utilisé dans cette expérience rho = 1000). La figure 9 montre que P1-P2 est proportionnelle au débit écoulé mesuré par la masse. Une régression linéaire sur des données expérimentales présenté en figure 9 permet de calculer précisément la résistance Rh du capillaire 8 (Rh = $1,076 \times 10^{13}$ Pa.s.m$^{-3}$ +/-0,3% s.e.m.). En utilisant cette valeur de Rh, le dispositif présenté dans cet exemple permet dans la configuration présentée en figure 8 de contrôler un débit D dans la puce micro fluidique 17 avec une précision de 0,75% de la pleine échelle.

**Revendications**

1. Capteur de pression (213) comportant un support (200) muni d'un logement dans lequel sont disposés une membrane (206) déformable associée à des moyens de mesure de la déformation de la membrane (212), la membrane pouvant se déformer sous l'action d'un fluide sous pression, de préférence un liquide, appliqué de préférence sur la surface supérieure (231) de la membrane (206), les moyens de mesure de la déformation de la membrane (212) étant reliés électriquement à des contacts électriques (202, 203) permettant de recueillir un signal électrique fonction de la pression du fluide, la surface supérieure (231) de la membrane (206) délimitant dans le logement du support (200) la face inférieure d'une cavité (208) comportant également une face supérieure, cavité dans laquelle débouchent deux canalisations distinctes respectivement d'arrivée (215) et de départ (216) (ou vice-versa) d'un liquide permettant l'écoulement du fluide au contact de la surface supérieure (231) de la membrane (206), un espace (207) étant disposé sous la membrane (206) permettant à celle-ci de se déplacer sous l'action de la pression du fluide injecté dans le capteur, cet espace (207) disposant d'un évent de sortie (204) et le capteur comporte un joint d'étanchéité (210) disposé latéralement tout autour des parois du logement (200) entre la surface supérieure de la membrane (206) et la face supérieure de la cavité (208), **caractérisé en ce que** support (200) est traversé par une canalisation d'arrivée (204,207) d'un second fluide dont une première extrémité vient à proximité de la surface inférieure (230) de la membrane (206), la seconde extrémité de la canalisation d'arrivée (204, 207) située du côté opposé à la membrane (206) étant munie d'un connecteur fluidique (223) pour la fourniture d'un fluide sous pression, de préférence un gaz, le capteur étant intégré dans le bouchon (61) d'un réservoir (2) d'un ensemble de mesure de débit, ce bouchon (61) étant traversé par un capillaire (8) faisant office de restriction débouchant dans la canalisation d'arrivée (215) de liquide (3), à proximité de la cavité (208) du capteur.

2. Capteur selon la revendication 1, **caractérisé en ce que** la membrane déformable est une membrane souple en silicium.

3. Capteur selon l'une des revendications précédentes, **caractérisé en ce que** les moyens de mesure de la déformation de la membrane (212) comportent des éléments sensibles à la déformation de la membrane tels que des éléments réalisés en matériau piézo-résistif.

4. Capteur selon l'une des revendications précédentes, **caractérisé en ce que** les canalisations d'arrivée et de départ de liquide (215, 216) font un angle compris entre environ 10° et 90°, de préférence entre 20° et 70°, plus préférentiellement entre 40° et 50°, avec la surface supérieure de la membrane.

**5.** Capteur selon l'une des revendications précédentes, **caractérisé en ce que** le volume de la cavité (208) est inférieur à 50 microlitres, de préférence inférieur à 10 microlitres, plus préférentiellement inférieur à 5 microlitres.

**6.** Capteur selon l'une des revendications précédentes, **caractérisé en ce que** la cavité (208) est sensiblement dépourvue de tout volume mort de manière à éviter la formation de bulles dans le fluide.

**7.** Système de mesure du débit d'un liquide (3) dans un circuit micro fluidique (17) **caractérisé en ce qu'**il comporte un capteur de pression selon l'une des revendications 1 à 6.

**8.** Système selon la revendication 7, **caractérisé en ce que** la résistance hydraulique de la restriction est supérieure ou égale à 1,2x10 puissance 10 Pa.s.L$^{-1}$.

**9.** Système selon l'une des revendications 7 ou 8, **caractérisé en ce que** la restriction est constituée par un tube capillaire (8) de diamètre inférieur à 300 micromètres.

**10.** Système selon l'une des revendications 7 à 9, **caractérisé en ce que** la restriction (9) est disposée en amont des moyens capteur de pression (13).

**11.** Utilisation du capteur selon l'une des revendications précédentes pour contrôler le débit de fluide aux entrées et/ou sorties d'une puce micro-fluidique.

**Patentansprüche**

**1.** Drucksensor (213) mit einem Träger (200), der mit einem Gehäuse versehen ist, in dem eine verformbare Membran (206) angeordnet ist, die mit Mitteln zum Messen der Verformung der Membran (212) verbunden ist, wobei die Membran unter der Einwirkung eines unter Druck stehenden Fluides, vorzugsweise einer unter Druck stehenden Flüssigkeit, verformbar ist, welches oder welche vorzugsweise auf die Oberseite (231) der Membran (206) aufgebracht wird, wobei Mittel zum Messen der Verformung der Membran (212) mit elektrischen Kontakten (202, 203) elektrisch verbunden sind, wodurch die Aufnahme eines elektrischen, vom Druck des Fluides abhängigen Signals ermöglicht ist, wobei die obere Fläche (231) der Membran (206) in dem Gehäuse des Trägers (200) die Unterseite eines Hohlraums (208) begrenzt, der ebenfalls eine Oberseite aufweist, in welchen Hohlraum zwei getrennte Rohrleitungen, jeweils eine Flüssigkeitseinlassrohrleitung (215) und ein Flüssigkeitsauslassrohrleitung (216), oder umgekehrt münden, wodurch die Fließbewegung des Fluides in Kontakt mit der oberen Fläche (231) des Membran (206) ermöglicht ist, wobei ein Raum (207) unter der Membran (206) angeordnet ist, wodurch sich diese unter der Wirkung des Drucks des in den Sensor eingespritzten Fluides bewegen kann, wobei dieser Raum (207) eine Auslassöffnung (204) und der Sensor eine seitlich um die Wände des Gehäuses (200) zwischen der oberen Fläche der Membran (206) und der Oberseite des Hohlraums (208) angeordnete Dichtung (210) umfasst, **dadurch gekennzeichnet ist, dass** sich eine Einlassrohrleitung (204, 207) für ein zweites Fluid mit einem ersten Ende nahe an der unteren Fläche (230) der Membran (206) durch dem Träger (200) erstreckt, wobei ein zweites Ende der Einlassrohrleitung (204, 207) auf der der Membran (206) gegenüberliegenden Seite mit einem Fluidverbinder (223) versehen ist, um ein unter Druck stehendes Fluid, vorzugsweise ein unter Druck stehendes Gas, zuzuführen, wobei der Sensor im Stopfen (61) eines Reservoirs (2) einer Durchflussrate-Messanordnung integriert ist, wobei sich eine als Drossel verwendete Kapillare (8) durch den Stopfen (61) erstreckt, und in der Einlassrohrleitung (215) für die Flüssigkeit (3) in der Nähe des Hohlraums (208) des Sensors mündet.

**2.** Sensor nach Anspruch 1, **dadurch gekennzeichnet, dass** die verformbare Membran eine flexible Siliziummembran ist.

**3.** Sensor nach einem der vorhergehenden Ansprüche, **dadurch gekennzeichnet, dass** die Mittel zum Messen der Verformung der Membran (212) gegen die Verformung der Membran empfindliche Elemente, wie Elemente aus piezoresistivem Material, umfassen.

**4.** Sensor nach einem der vorhergehenden Ansprüche, **dadurch gekennzeichnet, dass** die Flüssigkeitseinlass- und Flüssigkeitsauslassrohrleitungen (215, 216) einen Winkel zwischen etwa 10° und 90°, vorzugsweise zwischen 20° und 70°, bevorzugter zwischen 40° und 50°, zur oberen Fläche der Membran bilden.

**5.** Sensor nach einem der vorhergehenden Ansprüche, **dadurch gekennzeichnet, dass** das Volumen des Hohlraums (208) weniger als 50 Mikroliter, vorzugsweise weniger als 10 Mikroliter, bevorzugter weniger als 5 Mikroliter beträgt.

**6.** Sensor nach einem der vorhergehenden Ansprüche, **dadurch gekennzeichnet, dass** der Hohlraum (208) im Wesentlichen kein Totvolumen aufweist, um die Blasenbildung in der Flüssigkeit zu verhindern.

**7.** System zum Messen der Durchflussrate einer Flüssigkeit (3) in einem Mikrofluidik-Kreislauf (17), **da-**

**durch gekennzeichnet, dass** es einen Drucksensor nach einem der Ansprüche 1 bis 6 umfasst.

8. System nach Anspruch 7, **dadurch gekennzeichnet, dass** der hydraulische Widerstand der Drossel grösser oder gleich 1,2x10 hoch 10 Pa.s.L-1 ist.

9. System nach einem der Ansprüche 7 oder 8, **dadurch gekennzeichnet, dass** die Drossel aus einem Kapillarröhrchen (8) mit einem Durchmesser von weniger als 300 Mikrometern besteht.

10. System nach einem der Ansprüche 7 bis 9, **dadurch gekennzeichnet, dass** die Drossel (9) vor dem Drucksensormittel (13) angeordnet ist.

11. Verwendung des Sensors gemäß einem der vorhergehenden Ansprüche zum Steuern der Fluidströmungsrate an den Einlässen und/oder Auslässen eines Mikrofluidik-Chips.

**Claims**

1. A pressure sensor (213) comprising a support (200) provided with a housing, in which are arranged a deformable membrane (206) associated with means for measuring the deformation of the membrane (212), wherein the membrane is deformable under the action of a pressurized fluid, preferably a pressurized liquid, preferably applied onto the upper surface (231) of the membrane (206), wherein means for measuring the deformation of the membrane (212) are electrically connected to electrical contacts (202, 203) enabling thereby to collect an electrical signal depending on the pressure of the fluid, wherein the upper surface (231) of the membrane (206) delimits in the housing of the support (200) the lower face of a cavity (208) also comprising an upper face, cavity into which open two separate pipes, respectively an liquid inlet pipe (215) and an liquid outlet pipe (216), or vice versa, enabling thereby the fluid to flow in contact with the upper surface (231) of the membrane (206), wherein a space (207) is disposed under the membrane (206) enabling thereby the latter to move under the action of the pressure of the fluid injected into the sensor, wherein this space (207) has an outlet vent (204) and the sensor comprises a seal (210) disposed laterally all around the walls of the housing (200) between the upper surface of the membrane (206) and the upper face of the cavity (208), **characterized in that** an inlet pipe (204, 207) for a second fluid extends through the support (200), a first end of the inlet pipe (204, 207) coming close to the lower surface (230) of the membrane (206), the second end of the inlet pipe (204, 207) on the side opposite to the membrane (206) being provided with a fluidic connector (223) for supplying a pressurized fluid, preferably a pressurized gas, wherein the sensor is integrated in the plug (61) of a reservoir (2) of a flow measurement assembly, a capillary (8) extending through said plug (61) and being used as a restriction opening into the inlet pipe (215) for the liquid (3) near the cavity (208) of the sensor.

2. The sensor according to claim 1, **characterized in that** the deformable membrane is a flexible silicon membrane.

3. The sensor according to any one of the preceding claims, **characterized in that** the means for measuring the deformation of the membrane (212) comprise elements sensitive to the deformation of the membrane such as elements made of piézo-resistive material.

4. The sensor according to any one of the preceding claims, **characterized in that** the liquid inlet and outlet pipes (215, 216) form an angle of between about 10° and 90°, preferably between 20° and 70°, more preferably between 40° and 50°, to the upper surface of the membrane.

5. The sensor according to any one of the preceding claims, **characterized in that** the volume of the cavity (208) is less than 50 microliters, preferably less than 10 microliters, more preferably less than 5 microliters.

6. The sensor according to any one of the preceding claims, **characterized in that** the cavity (208) has substantially no dead volume so as to prevent bubbles from forming in the fluid.

7. A system for measuring the flow rate of a liquid (3) in a microfluidic circuit (17), **characterized in that** it comprises a pressure sensor according to any one of the claims 1 to 6.

8. The system according to claim 7, **characterized in that** the hydraulic resistance of the restriction is superior or equal to $1.2 \times 10$ to the power of 10 $Pa.s.L^{-1}$.

9. The system according to any one of claims 7 or 8, **characterized in that** the restriction is composed by a capillary tube (8) of diameter less than 300 micrometers.

10. The system according to any one of the claims 7 to 9, **characterized in that** the restriction (9) is disposed upstream of the pressure sensor means (13).

11. The use of the sensor according to any one of the preceding claims for controlling the fluid flow rate at the inlets and/or outlets of a microfluidic chip.

figure 1

figure 2

Figure 3

Figure 4

Figure 5

Figure 6

Figure 7a

Figure 7b

Figure 8

Figure 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5515735 A
- US 8403908 B
- WO 9740350 A
- US 2006144151 A
- US 20040255645 A
- WO 2010128399 A

**Littérature non-brevet citée dans la description**

- **N.T.NGUYEN.** micromachined flow sensors-a review. *FLOW MEASUREMENT AND INSTRUMENTATION,* Mars 1997
- Design and Fabrication of a MEMS Flow Sensor and Its Application in Precise Liquid Dispensing. **YAXIN LIU et al.** State Key Laboratory of Robotics and System. Harbin Institute of Technology
- **OOSTERBROECK et al.** *A micromachined pressure/flow sensor*
- **K.N. BHAT.** Silicon Micromachined Pressure Sensors. *Journal of the Indian Institute of Science,* 01 Janvier 2007, vol. 87